(19) Europäisches Patentamt
European Patent Office
Office européen des brevets

(11) **EP 3 010 290 B1**

(12) **EUROPEAN PATENT SPECIFICATION**

(45) Date of publication and mention
of the grant of the patent:
**07.03.2018 Bulletin 2018/10**

(51) Int Cl.:
**H04W 52/18** *(2009.01)*     **H04W 52/14** *(2009.01)*
**H04W 52/26** *(2009.01)*     **H04W 52/24** *(2009.01)*
**H04B 17/391** *(2015.01)*

(21) Application number: **13890353.9**

(22) Date of filing: **01.08.2013**

(86) International application number:
**PCT/CN2013/080586**

(87) International publication number:
**WO 2015/013939 (05.02.2015 Gazette 2015/05)**

(54) **UPLINK POWER CONTROL METHOD AND DEVICE THEREOF**

UPLINK-LEISTUNGSSTEUERUNGSVERFAHREN UND VORRICHTUNG DAFÜR

PROCÉDÉ DE COMMANDE DE PUISSANCE DE LIAISON MONTANTE ET DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.04.2016 Bulletin 2016/16**

(73) Proprietor: **Huawei Technologies Co., Ltd.
Longgang District
Shenzhen, Guangdong 518129 (CN)**

(72) Inventors:
• **LUO, Zezhou
Shenzhen
Guangdong 518129 (CN)**
• **GILIMYANOV, Ruslan
Shenzhen 518129 (CN)**
• **ZHUANG, Hongcheng
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
CN-A- 101 982 992     CN-A- 102 573 027
CN-A- 102 573 027     CN-A- 103 037 380
CN-A- 103 037 380     KR-A- 20100 086 770

Description

## TECHNICAL FIELD

Embodiments of the present invention relate to the field of wireless communications, and in particular, to an uplink power control method and an apparatus thereof.

## BACKGROUND

In an existing cellular network, when an orthogonal frequency division multiplex (Orthogonal Frequency Division Multiplex, OFDM) technology is used, signals of user equipments (User Equipment, UE) within a cell are orthogonal to each other and do not interfere with each other, but signals of UEs in different cells interfere with each other.

Uplink power control is a control manner of controlling an uplink transmit power of UE while considering both service quality of the UE and interference of the UE to UE of a neighboring cell.

In an existing uplink power control manner, an uplink power control parameter of UE is adjusted mainly according to local information such as link quality of the UE and interference of a transmit power of the UE to a neighboring cell; such uplink power control improves only service quality of local UE, but does not help improve overall network performance.

KR 2010 0086770 A (SNU R&DB FOUNDATION [KR]) 2 August 2010 (2010-08-02) discloses a method comprising: estimating cell gain information by receiving feedback information from a terminal of a corresponding cell(S10); estimating external interference information by using the interferential signal from the adjacent cell(S20); determining a cell power vector by using the cell gain information and external interference information(S30); transmitting the power control information corresponding to the cell power vector to the terminal within the relative cell(S40).

CN 103 037 380 A }UNIV BEIJING F'OSTS&TELECOMM) 10 April 2013 (2013-0}-10) discloses a uplink power control method based on isolation of TD-LTE, which comprises: setting, by each TD-LTE UE target SIR according to each TD-LTE UE isolation, wherein a portion of path loss and ACIR is determined by a ratio parameter; constructing the power control optimization model with an optimal function of the ratio parameter; obtaining the optimal result of the ratio parameter.

## SUMMARY

Embodiments of the present invention provide an uplink power control method and an apparatus thereof, to improve overall network performance.

According to a first aspect, an uplink power control method is provided, including: optimizing uplink power control parameters of the multiple cells according to a KPI model, where the KPI model is used to indicate a mapping relationship between the uplink power control parameters of the multiple cells and at least one KPI of a network on which the multiple cells are located; and performing uplink power control on user equipment in the multiple cells according to the uplink power control parameters of the multiple cells.

With reference to the first aspect, in one implementation manner of the first aspect, the optimizing uplink power control parameters of the multiple cells according to a KPI model includes: creating a first optimization model according to the KPI model, where the first optimization model uses the uplink power control parameters of the multiple cells as optimization variables, and uses an optimal solution of the at least one KPI within a value range of the uplink power control parameters as an optimization target; and solving the first optimization model, to acquire uplink power control parameters of the multiple cells.

With reference to the first aspect or any one of the foregoing implementation manners, in another implementation manner of the first aspect, the at least one KPI is multiple KPIs, and the creating a first optimization model according to the KPI model includes: determining the uplink power control parameters of the multiple cells as optimization variables of the first optimization model; and determining a minimum weighted value of the multiple KPIs as an optimization target of the first optimization model.

With reference to the first aspect or any one of the foregoing implementation manners, in another implementation manner of the first aspect, the solving the first optimization model includes: mapping the optimization variables of the first optimization model from a discrete parameter space to a continuous parameter space, and converting a target function of the first optimization model into a continuous and smooth function, to acquire a second optimization model after conversion; determining a solution of the optimization variables in the continuous parameter space according to the second optimization model; and mapping the solution of the optimization variables in the continuous parameter space back to the discrete parameter space, to determine a solution of the optimization variables in the discrete parameter space.

With reference to the first aspect or any one of the foregoing implementation manners, in another implementation manner of the first aspect, the uplink power control parameters of the multiple cells include an uplink power control reference value of each cell of the multiple cells, and an uplink path loss compensation factor of each cell.

With reference to the first aspect or any one of the foregoing implementation manners, in another implementation manner of the first aspect, the at least one KPI of the network includes at least one of the following: uplink load, a call drop and block ratio CDBR, and an average uplink signal to interference plus noise ratio.

According to a second aspect, an uplink power control apparatus is provided, including a processing unit, configured to optimize uplink power control parameters of the multiple cells according to a KPI model, where the KPI model is used to indicate a mapping relationship between the uplink power control parameters of the multiple cells and at least one KPI of a network on which the multiple cells are located; and a control unit, configured to perform uplink power control on user equipment in the multiple cells according to the uplink power control parameters of the multiple cells that are acquired by the processing unit.

With reference to the second aspect, in one implementation manner of the second aspect, the processing unit is specifically configured to create a first optimization model according to the KPI model, where the first optimization model uses the uplink power control parameters of the multiple cells as optimization variables, and uses an optimal solution of the at least one KPI within a value range of the uplink power control parameters as an optimization target; and solve the first optimization model, to acquire uplink power control parameters of the multiple cells.

With reference to the second aspect or any one of the foregoing implementation manners, in another implementation manner of the second aspect, the at least one KPI is multiple KPIs, and the processing unit is specifically configured to determine the uplink power control parameters of the multiple cells as optimization variables of the first optimization model; and determine a minimum weighted value of the multiple KPIs as an optimization target of the first optimization model.

With reference to the second aspect or any one of the foregoing implementation manners, in another implementation manner of the second aspect, the processing unit is specifically configured to map the optimization variables of the first optimization model from a discrete parameter space to a continuous parameter space, and convert a target function of the first optimization model into a continuous and smooth function, to acquire a second optimization model after conversion; determine a solution of the optimization variables in the continuous parameter space according to the second optimization model; and map the solution of the optimization variables in the continuous parameter space back to the discrete parameter space, to determine a solution of the optimization variables in the discrete parameter space.

With reference to the second aspect or any one of the foregoing implementation manners, in another implementation manner of the second aspect, the uplink power control parameters of the multiple cells include an uplink power control reference value of each cell of the multiple cells, and an uplink path loss compensation factor of each cell.

With reference to the second aspect or any one of the foregoing implementation manners, in another implementation manner of the second aspect, the at least one KPI of the network includes at least one of the following: uplink load, a call drop and block ratio CDBR, and an average uplink signal to interference plus noise ratio.

In the embodiments of the present invention, by considering impact of uplink power control parameters of multiple cells on a KPI of a network on which the multiple cells are located, uplink power control parameters that are more optimized from the perspective of global performance of the network are obtained, thereby improving overall performance of the network.

## BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic flowchart of an uplink power control method according to an embodiment of the present invention;

FIG. 2 is a schematic block diagram of an uplink power control apparatus according to an embodiment of the present invention; and

FIG. 3 is a schematic block diagram of an uplink power control apparatus according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be understood that the technical solutions of the present invention may be applied to various communications systems, such as: a Global System for Mobile Communications (Global System of Mobile communication, GSM), a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), a Long Term Evolution (Long Term Evolution, LTE) system, a Long Term Evolution Advanced (Advanced long term evolution, LTE-A) system, and a Universal Mobile Telecommunications System (Universal Mobile Telecommunication System, UMTS).

It should further be understood that in the embodiments of the present invention, user equipment (UE, User Equipment) includes but is not limited to a mobile station (MS, Mobile Station), a mobile terminal (Mobile Terminal), a mobile telephone (Mobile Telephone), a handset (handset), portable equipment (portable equipment), and the like. The user equipment may communicate with one or more core networks by using a radio access network (RAN, Radio Access Network). For example, the user equipment may be a mobile telephone (or referred to as a "cellular" telephone), or a computer having a wireless communication function; the user equipment may further be a portable, pocket-sized, handheld, computer built-in, or vehicle-mounted mobile apparatus.

A key performance indicator (KPI, Key Performance Indicator) in the embodiments of the present invention refers to a KPI of a cellular network, which may be, for example, uplink load, a call drop and block ratio (CDBR, Call Drop and Block Ratio), and an average uplink signal to interference plus noise ratio of the network. The KPI is an important parameter of network performance. In the embodiments of the present invention, when uplink power control is performed, a mapping relationship (such as a functional relationship) between uplink power control parameters of multiple cells in a network and one or more KPIs of the network is considered, to optimize the uplink power control parameters. The multiple cells may be all cells on the network, or cells that are located at key positions of the network and have a decisive effect on the KPI of the network, which are not specifically limited in the embodiments of the present invention.

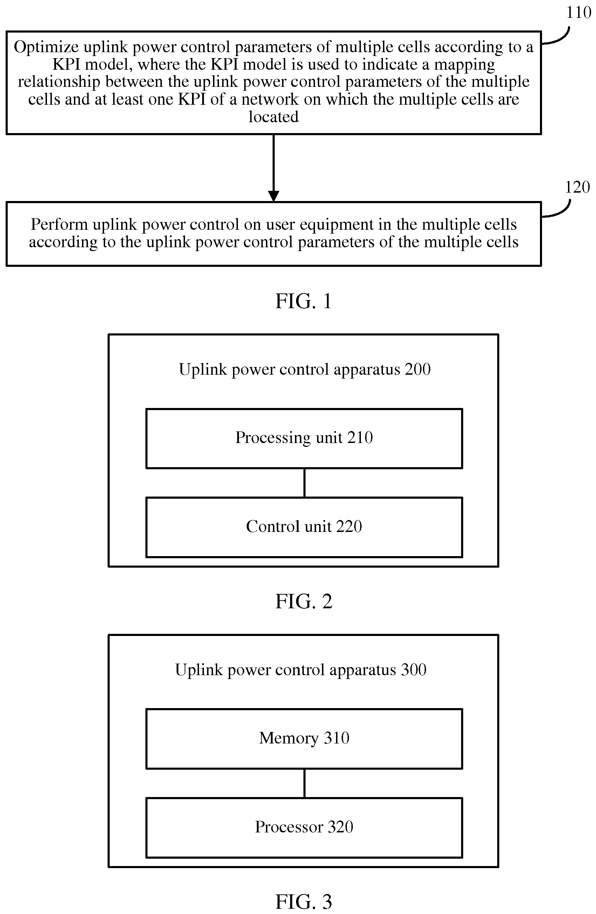

FIG. 1 is a schematic flowchart of an uplink power control method according to an embodiment of the present invention. The method may be executed by a base station, or executed by an independent uplink power control apparatus. The method in FIG. 1 includes:

110: Optimize uplink power control parameters of multiple cells according to a KPI model, where the KPI model is used to indicate a mapping relationship between the uplink power control parameters of the multiple cells and at least one KPI of a network on which the multiple cells are located.

120: Perform uplink power control on user equipment in the multiple cells according to the uplink power control parameters of the multiple cells.

In this embodiment of the present invention, by considering impact of uplink power control parameters of multiple cells on a KPI of a network on which the multiple cells are located, uplink power control parameters that are more optimized from the perspective of global performance of the network are obtained, thereby improving overall performance of the network.

It should be noted that, the at least one KPI in this embodiment of the present invention may be one KPI or may be multiple KPIs. Because KPIs may conflict with each other, that is, an increase in one KPI may lead to a decrease in another KPI, selecting multiple KPIs to perform joint optimization is more favorable to balance of overall network performance. In addition, a KPI selection manner is not specifically limited in this embodiment of the present invention. For example, the KPI may include only uplink load, or a combination of uplink load and a CDBR, or may be a combination of other KPIs. It should also be noted that, during joint optimization involving multiple KPIs, weights of the KPIs may be adjusted according to an actual situation, for example, adjustment is performed according to priority levels of the multiple KPIs.

In this embodiment of the present invention, the uplink power control parameters of the multiple cells may include: an uplink power control reference value of each cell of the multiple cells, and an uplink path loss compensation factor of each cell, and may further include an uplink power control parameter at another cell level.

It should be understood that, the KPI model in step 110 may be a functional relation, where the functional relation uses the uplink power control parameters of the multiple cells as independent variables and uses at least one KPI as a variable, and describes a mapping relationship between the KPI and the uplink power control parameters of the multiple cells.

It should be understood that, the optimizing uplink power control parameters of multiple cells according to a KPI model in step 110 may be: successively substituting, into the KPI model, values within a value range of the uplink power control parameters, to find a relatively optimized solution that meets a predetermined threshold condition of the KPI, or may be: creating an optimization model to determine an optimal solution of the power control parameters within a value range of the power control parameters. It should be understood that, the optimal solution may be locally optimal, or globally optimal.

Optionally, as an embodiment, the optimizing uplink power control parameters of multiple cells according to a KPI model in step 110 may include: creating a first optimization model according to the KPI model, where the first optimization model uses the uplink power control parameters of the multiple cells as optimization variables, and uses an optimal solution of the at least one KPI within a value range of the uplink power control parameter as an optimization target; and solving the first optimization model, to acquire uplink power control parameters of the multiple cells.

Optionally, as another embodiment, the at least one KPI may be multiple KPIs, and the creating a first optimization model according to the KPI model may include: determining the uplink power control parameters of the multiple cells as optimization variables of the first optimization model; and determining a minimum weighted value of the multiple KPIs as an optimization target of the first optimization model.

Specifically, when the at least one KPI is uplink load, the first optimization model may be shown in formula (1):

$$
\left\{
\begin{array}{l}
\min_X \Phi_{LOAD}(X) \\
X = (\vec{P}^{off}, \vec{\alpha})^T, \vec{P}^{off} = (p_1^{off}, \cdots, p_C^{off})^T, \vec{\alpha} = (\alpha_1, \cdots, \alpha_C)^T \\
p_c^{off} \in \left\{p_{\min}^{off}, p_{\min}^{off} + 1, \cdots, p_{\max}^{off}\right\}, \alpha_c \in \left\{0, 0.4, 0.5, \cdots, 1.0\right\}, c \in C
\end{array}
\right.
\tag{1}
$$

$X$ is an optimization variable, and the optimization variable includes two parts, where one part is $\vec{P}^{off}$ whose components include uplink power control reference values $p_c^{off}$ of C cells (corresponding to the multiple cells in step 110); and the other part is $\vec{\alpha}$ whose components include uplink path loss compensation factors $\alpha_c$ of C cells, where a value of c ranges from 1 to C. Values of $p_c^{off}$ and $\alpha_c$ are both pre-defined discrete values, as shown in formula (1). An optimization target is $\min_X \Phi_{LOAD}(X)$, that is, a minimum uplink load of the network.

Similarly, when the at least one KPI is a CDBR, the first optimization model may be shown in formula (2):

$$
\left\{
\begin{array}{l}
\min_X \Phi_{CDBR}(X) \\
X = (\vec{P}^{off}, \vec{\alpha})^T, \vec{P}^{off} = (p_1^{off}, \cdots, p_C^{off})^T, \vec{\alpha} = (\alpha_1, \cdots, \alpha_C)^T \\
p_c^{off} \in \left\{p_{\min}^{off}, p_{\min}^{off} + 1, \cdots, p_{\max}^{off}\right\}, \alpha_c \in \left\{0, 0.4, 0.5, \cdots, 1.0\right\}, c \in C
\end{array}
\right.
\tag{2}
$$

An optimization target is $\min_X \Phi_{CDBR}(X)$, that is, a minimum CDBR of the network.

Certainly, the at least one KPI may be selected to be multiple KPIs, for example, joint optimization may be performed on uplink load and a CDBR. Then, the first optimization model may be shown in formula (3):

$$
\left\{
\begin{array}{l}
\min_X \left\{\Phi = w_1 \Phi_{LOAD}(X) + w_2 \Phi_{CDBR}(X)\right\} \\
X = (\vec{P}^{off}, \vec{\alpha})^T, \vec{P}^{off} = (p_1^{off}, \cdots, p_C^{off})^T, \vec{\alpha} = (\alpha_1, \cdots, \alpha_C)^T \\
p_c^{off} \in \left\{p_{\min}^{off}, p_{\min}^{off} + 1, \cdots, p_{\max}^{off}\right\}, \alpha_c \in \left\{0, 0.4, 0.5, \cdots, 1.0\right\}, c \in C
\end{array}
\right.
\tag{3}
$$

An optimization target is $\min_X \{\Phi = w_1\Phi_{LOAD}(X) + w_2\Phi_{CDBR}(X)\}$, that is, a minimum weighted sum of the uplink load and CDBR of the network. Weighted values $w_1$ and $w_2$ may be determined according to factors such as priority levels of the uplink load and CDBR. For example, $w_1 + w_2 = 1$, where in the network, if impact of the uplink load on performance of the entire network is greater than that of the CDBR, it may be set that $w_1 = 0.7$, and $w_2 = 0.3$.

It should be noted that, a specific manner of solving the first optimization model is not limited in this embodiment of the present invention. Because values of the optimization variables are discrete (in an existing protocol, values of the uplink power control parameters are discrete values), and a target function is also discontinuous (including discontinuous functions such as min and max), a discrete optimizing manner may be used. For example, all discrete values within a value range of the optimization variables may be substituted into the optimization target to determine an optimal solution.

To solve the optimization problems (1) to (3), another common method, that is, a greedy algorithm, may be used. Specifically, a cell is randomly selected as an initial cell, and all possible values of uplink power control parameters ( $\vec{P}^{off}$ and $\vec{\alpha}$ ) of the cell are tried, to maximize performance of the cell (for example, minimize the load or minimize the CDBR), and the initial cell is added to a current cell set. Then, a neighboring cell of the cell is selected as a current cell. The current cell is added to the current cell set, and all possible values of uplink power control parameters of the current cell are tried, to maximize overall performance of the current cell set. The previous step is repeated until all cells are added to the current cell set, to finally determine values of uplink power control parameters of all the cells.

When all possible values of uplink power control parameters are tried to maximize the performance, one method is actually configuring a cell and measuring an actual performance indicator, and another method is estimating, by using a performance indicator model, a performance indicator that corresponds to a specific uplink power control parameter value. In order to determine a performance indicator model, a functional relation between an uplink power control parameter and a performance indicator needs to be created. Taking uplink load as an example, the uplink load may be expressed as follows:

$\Phi_{Load} = \sum_c \delta_c$, where $\delta_c$ is uplink load of a cell c and is expressed as follows:

$$\delta_c = \sum_{s \in S} \int_{A_{s,c}} \frac{n_{s(c)}^{rb}}{N^{rb}} \gamma_{s(c)}(x) dT_s(x)$$

where:

S represents a set of service types provided by a network;
C represents a cell set;
$A \subset \mathbb{R}^2$ represents a network coverage area;
$A_{s,c} \subset A$ represents a distribution area of a service $s \in S$ within a cell $c \in C$;
$T_s$ represents distribution of a service $s \in S$ within a network area $A \subset \mathbb{R}^2$;
$n_{s(d)}^{rb}$ represents a quantity of resource blocks used by a terminal that is located in $x \in A_{s,d}$ and requests a service $s \in S$;
$N^{rb}$ represents a total quantity of system resource blocks;
$\gamma_{s(c)}(x)$ represents an average transmission time ratio of a terminal that is located in $x \in A_{s,c}$ and requests a service $s \in S$, and $\gamma_{s(c)}(x)$ is expressed as follows:

$$\gamma_{s(c)}(x) = \frac{F_{s(c)}}{B_{s(c)}(x)}$$

where $F_{s(c)}$ represents an uplink bandwidth requested by a terminal that is located in $x \in A_{s,c}$ and requests a service $s \in S$;
$B_{s(c)}(x)$ represents an uplink transmission bandwidth acquired by a terminal that is located in $x \in A_{s,c}$ and requests a service $s \in S$, which uses [MHz] as a unit, and $B_{s(c)}(x)$ is expressed as follows:

$$B_{s(c)}(x) = \eta_{s,c}^{BW} \frac{n_{s(c)}^{rb}}{N^{rb}} W \log_2 \left( 1 + \frac{SINR_{s(c)}(x)}{\eta_{s,c}^{SINR}} \right)$$

where $SINR_{s(c)}(x)$ represents a SINR acquired by a terminal receiver that belongs to a cell $c \in C$ and requests a service $s \in S$, and $SINR_{s(c)}(x)$ is expressed as follows:

$$SINR_{s(c)}(x) := \frac{N^{rb}}{n_{s(c)}^{rb}} \frac{R_{s(c),c}(x)}{I_c}$$

where $\eta_{s,c}^{BW}$ represents a bandwidth efficiency factor of a service $s \in S$ within a cell $c \in C$;

$\eta_{s,c}^{SINR}$ represents a SINR efficiency factor of a service $s \in S$ within a cell $c \in C$;

$R_{s(d),c}(x)$ represents a power of a signal received by a cell $c \in C$ from a terminal that is located in $x \in A_{s,d}$ and requests a service $s \in S$ ; $R_{s(d),c}(x)$ uses [mW] as a unit, and is expressed as follows:

$$R_{s(d),c}(x) = 10^{(P_{s(d)} - L_{s(d),c}(x))/10};$$

where $P_{s(d)}(x)$ represents a transmit power of a terminal that is located in $x \in A_{s,d}$ and requests a service $s \in S$, and $P_{s(d)}(x)$ is expressed as follows:

$$P_{s(d)}(x) = \min\{P_{s(d)}^{max}, \ P_d^{off} + \alpha_d L_{s(d),d}(x) + 10 \log_{10} n_{s(d)}^{rb}\};$$

where $L_{s(d),c}(x)$ represents a path loss between a cell $c \in C$ and a terminal that is located in $x \in A_{s,d}$ and requests a service $s \in S$, and $L_{s(d),c}(x)$ uses [dB] as a unit;

$P_{s(d)}^{max}$ represents a maximum transmit power of a terminal that requests a service $s \in S$, and $P_{s(d)}^{max}$ uses [dBm] as a unit; and

$I_c$ represents an interference power received by a cell $c \in C$, and $I_c$ uses [mW] as a unit and is expressed as follows:

$$I_c = \eta_c^{noise} + \sum_{d \in C \setminus \{c\}} \sum_{s \in S} \int_{A_{s,d}} \lambda_d \gamma_{s(d)}(x) R_{s(d),c}(x) dT_s(x)$$

$$\lambda_d = \begin{cases} 1, & \text{if } \delta_d^{max} \leq \delta_d, \\ \dfrac{\delta_d}{\delta_d^{max}}, & \text{otherwise}, \end{cases}$$

where $\delta_d^{max}$ is a preset load threshold of a cell $d \in C$.

Optionally, the solving the first optimization model may further include: mapping the optimization variables of the first optimization model from a discrete parameter space to a continuous parameter space, and converting a target function of the first optimization model into a continuous and smooth function, to acquire a second optimization model after conversion; determining a solution of the optimization variables in the continuous parameter space according to the second optimization model; and mapping the solution of the optimization variables in the continuous parameter space back to the discrete parameter space, to determine a solution of the optimization variables in the discrete parameter space. It should be understood that, the solution in the continuous parameter space may refer to a value, that is, values of the optimization variables in the continuous parameter space are mapped back to the discrete parameter space.

In this embodiment of the present invention, a discrete and discontinuous optimization problem is converted into a continuous optimization problem, and therefore, the continuous optimization model can be solved by using an existing search algorithm (such as interior point methods) for the continuous optimization problem, thereby reducing a quantity of iterations, and improving solving efficiency of optimization.

It should be understood that, there may be multiple methods for mapping the solution in the continuous parameter space back to the discrete parameter space. For example, a shortest distance (such as an Euclidean distance) from the solution in the continuous parameter space to all values in the discrete parameter space is determined, and a solution in the discrete parameter space that has a shortest distance to the solution in the continuous parameter space is a final solution required. Certainly, a method of direct truncation may also be used, to search in the discrete parameter space for a solution that is greater than and closest to the solution in the continuous parameter space, and use the found solution as a final solution. The method is not specifically limited in this embodiment of the present invention.

With reference to FIG. 1, the uplink power control method according to this embodiment of the present invention is described in detail above. The following describes in detail an uplink power control apparatus according to an embodiment of the present invention with reference to FIG. 2 to FIG. 3. The apparatus may be a base station, or may be an independent logical entity or apparatus.

FIG. 2 is a schematic block diagram of an uplink power control apparatus according to an embodiment of the present invention. The uplink power control apparatus 200 includes a processing unit 210 and a control unit 220.

The processing unit 210 is configured to optimize uplink power control parameters of multiple cells according to a KPI model, where the KPI model is used to indicate a mapping relationship between the uplink power control parameters of the multiple cells and at least one KPI of a network on which the multiple cells are located.

The control unit 220 is configured to perform uplink power control on user equipment in the multiple cells according to the uplink power control parameters of the multiple cells that are acquired by the processing unit 210.

In this embodiment of the present invention, by considering impact of uplink power control parameters of multiple cells on a KPI of a network on which the multiple cells are located, uplink power control parameters that are more optimized from the perspective of global performance of the network are obtained, thereby improving overall performance of the network.

In this embodiment of the present invention, the uplink power control parameters of the multiple cells may include: an uplink power control reference value of each cell of the multiple cells, and an uplink path loss compensation factor of each cell, and may further include an uplink power control parameter at another cell level.

Optionally, as one embodiment, the processing unit 210 is specifically configured to create a first optimization model according to the KPI model, where the first optimization model uses the uplink power control parameters of the multiple cells as optimization variables, and uses an optimal solution of the at least one KPI within a value range of the uplink power control parameters as an optimization target; and solve the first optimization model, to acquire uplink power control parameters of the multiple cells.

Optionally, as another embodiment, the at least one KPI is multiple KPIs.

It should be noted that, the at least one KPI in this embodiment of the present invention may be one KPI or may be multiple KPIs. Because KPIs may conflict with each other, that is, an increase in one KPI may lead to a decrease in another KPI, selecting multiple KPIs to perform joint optimization is more favorable to balance of overall network performance.

Optionally, as another embodiment, the processing unit 210 is specifically configured to map the optimization variables of the first optimization model from a discrete parameter space to a continuous parameter space, and convert a target function of the first optimization model into a continuous and smooth function, to acquire a second optimization model after conversion; determine a solution of the optimization variables in the continuous parameter space according to the second optimization model; and map the solution of the optimization variables in the continuous parameter space back to the discrete parameter space, to determine a solution of the optimization variables in the discrete parameter space.

In this embodiment of the present invention, a discrete and discontinuous optimization problem is converted into a continuous optimization problem, and therefore, the continuous optimization model can be solved by using an existing search algorithm (such as interior point methods) for the continuous optimization problem, thereby reducing a quantity of iterations, and improving solving efficiency of optimization.

Optionally, as another embodiment, the uplink power control parameters of the multiple cells include an uplink power control reference value of each cell of the multiple cells, and an uplink power loss compensation factor of each cell.

Optionally, as another embodiment, the at least one KPI of the network includes at least one of the following: uplink load, a call drop and block ratio CDBR, and an average uplink signal to interference plus noise ratio.

FIG. 3 is a schematic block diagram of an uplink power control apparatus according to another embodiment of the present invention. The uplink power control apparatus 300 includes a memory 310 and a processor 320.

The memory 310 is configured to store an instruction that is required by the processor 320 during execution.

The processor 320 is configured to: optimize uplink power control parameters of multiple cells based on the instruction in the memory 310 according to a KPI model, where the KPI model is used to indicate a mapping relationship between the uplink power control parameters of the multiple cells and at least one KPI of a network on which the multiple cells are located; and perform uplink power control on user equipment in the multiple cells according to the uplink power control parameters of the multiple cells.

In this embodiment of the present invention, the uplink power control parameters of the multiple cells may include: an uplink power control reference value of each cell of the multiple cells, and an uplink path loss compensation factor of each cell, and may further include an uplink power control parameter at another cell level.

Optionally, as an embodiment, the processor 320 is specifically configured to create a first optimization model according to the KPI model, where the first optimization model uses the uplink power control parameters of the multiple cells as optimization variables, and uses an optimal solution of the at least one KPI within a value range of the uplink power control parameters as an optimization target; and solve the first optimization model, to acquire uplink power control parameters of the multiple cells.

Optionally, as another embodiment, the at least one KPI is multiple KPIs.

It should be noted that, the at least one KPI in this embodiment of the present invention may be one KPI or may be multiple KPIs. Because KPIs may conflict with each other, that is, an increase in one KPI may lead to a decrease in another KPI, selecting multiple KPIs to perform joint optimization is more favorable to balance of overall network performance.

Optionally, as another embodiment, the processor 320 is specifically configured to map the optimization variables of the first optimization model from a discrete parameter space to a continuous parameter space, and convert a target function of the first optimization model into a continuous and smooth function, to acquire a second optimization model after conversion; determine a solution of the optimization variables in the continuous parameter space according to the second optimization model; and map the solution of the optimization variables in the continuous parameter space back to the discrete parameter space, to determine a solution of the optimization variables in the discrete parameter space.

In this embodiment of the present invention, a discrete and discontinuous optimization problem is converted into a continuous optimization problem, and therefore, the continuous optimization model can be solved by using an existing search algorithm (such as interior point methods) for the continuous optimization problem, thereby reducing a quantity of iterations, and improving solving efficiency of optimization.

Optionally, as another embodiment, the uplink power control parameters of the multiple cells include an uplink power control reference value of each cell of the multiple cells, and an uplink power loss compensation factor of each cell.

Optionally, as another embodiment, the at least one KPI of the network includes at least one of the following: uplink load, a call drop and block ratio CDBR, and an average uplink signal to interference plus noise ratio.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. An uplink power control method, comprising:

   optimizing(110) uplink power control parameters of multiple cells according to a key performance indicator, KPI, model, wherein the KPI model is used to indicate a mapping relationship between the uplink power control parameters of the multiple cells and at least one KPI of a network on which the multiple cells are located; and performing(120) uplink power control on user equipment in the multiple cells according to the uplink power control parameters of the multiple cells.

2. The uplink power control method according to claim 1, wherein the optimizing uplink power control parameters of the multiple cells according to a KPI model, comprises:

   creating a first optimization model according to the KPI model, wherein the first optimization model uses the uplink power control parameters of the multiple cells as optimization variables, and uses an optimal solution of the at least one KPI within a value range of the uplink power control parameters as an optimization target; and solving the first optimization model, to acquire uplink power control parameters of the multiple cells.

3. The uplink power control method according to claim 2, wherein the at least one KPI is multiple KPIs, and the creating a first optimization model according to the KPI model comprises:

   determining the uplink power control parameters of the multiple cells as optimization variables of the first optimization model; and
   determining a minimum weighted value of the multiple KPIs as an optimization target of the first optimization model.

4. The uplink power control method according to claim 2 or 3, wherein the solving the first optimization model comprises:

   mapping the optimization variables of the first optimization model from a discrete parameter space to a continuous parameter space, and converting a target function of the first optimization model into a continuous and smooth function, to acquire a second optimization model after conversion;
   determining a solution of the optimization variables in the continuous parameter space according to the second optimization model; and
   mapping the solution of the optimization variables in the continuous parameter space back to the discrete parameter space, to determine a solution of the optimization variables in the discrete parameter space.

5. The uplink power control method according to any one of claims 1 to 4, wherein the uplink power control parameters of the multiple cells comprise an uplink power control reference value of each cell of the multiple cells, and an uplink path loss compensation factor of each cell.

6. The uplink power control method according to any one of claims 1 to 5, wherein the at least one KPI of the network comprises at least one of the following:

   uplink load, a call drop and block ratio, CDBR, and an average uplink signal to interference plus noise ratio.

7. An uplink power control apparatus(200), comprising:

   a processing unit(210), configured to optimize uplink power control parameters of multiple cells according to a key performance indicator, KPI, model, wherein the KPI model is used to indicate a mapping relationship between the uplink power control parameters of the multiple cells and at least one KPI of a network on which the multiple cells are located; and
   a control unit(220), configured to perform uplink power control on user equipment in the multiple cells according to the uplink power control parameters of the multiple cells that are acquired by the processing unit (210).

8. The uplink power control apparatus (200) according to claim 7, wherein the processing unit (210) is specifically configured to create a first optimization model according to the KPI model, wherein the first optimization model uses the uplink power control parameters of the multiple cells as optimization variables, and uses an optimal solution of the at least one KPI within a value range of the uplink power control parameters as an optimization target; and solve the first optimization model, to acquire uplink power control parameters of the multiple cells.

9. The uplink power control apparatus (200) according to claim 7 or 8, wherein the at least one KPI is multiple KPIs, and the processing unit (210) is specifically configured to determine the uplink power control parameters of the multiple cells as optimization variables of the first optimization model, and determine a minimum weighted value of the multiple KPIs as an optimization target of the firs optimization model.

10. The uplink power control apparatus (200) according to claim 8 or 9, wherein the processing unit (210) is specifically configured to map the optimization variables of the first optimization model from a discrete parameter space to a continuous parameter space, and convert a target function of the first optimization model into a continuous and smooth function, to acquire a second optimization model after conversion; determine a solution of the optimization variables in the continuous parameter space according to the second optimization model; and map the solution of the optimization variables in the continuous parameter space back to the discrete parameter space, to determine a solution of the optimization variables in the discrete parameter space.

11. The uplink power control apparatus (200) according to any one of claims 7 to 10, wherein the uplink power control parameters of the multiple cells comprise an uplink power control reference value of each cell of the multiple cells, and an uplink path loss compensation factor of each cell.

12. The uplink power control apparatus (200) according to any one of claims 7 to 11, wherein the at least one KPI of the network comprises at least one of the following:

uplink load, a call drop and block ratio, CDBR, and an average uplink signal to interference plus noise ratio.

**Patentansprüche**

1. Uplink-Leistungsregelungsverfahren, umfassend:

Optimieren (110) von Uplink-Leistungsregelungsparametern mehrerer Zellen gemäß einem Performance-Kennzahlen, KPI,-Modell, wobei das KPI-Modell verwendet wird, um eine Zuordnungsbeziehung zwischen den Uplink-Leistungsregelungsparametern der mehreren Zellen und mindestens einer KPI eines Netzwerks anzuzeigen, in welchem sich die mehreren Zellen befinden; und
Durchführen (120) von Uplink-Leistungsregelung an Benutzereinrichtungen in den mehreren Zellen gemäß den Uplink-Leistungsregelungsparametern der mehreren Zellen.

2. Uplink-Leistungsregelungsverfahren nach Anspruch 1, wobei das Optimieren von Uplink-Leistungsregelungsparametern der mehreren Zellen gemäß einem KPI-Modell umfasst:

Erstellen eines ersten Optimierungsmodell gemäß dem KPI-Modell, wobei das erste Optimierungsmodell die Uplink-Leistungsregelungsparameter der mehreren Zellen als Optimierungsvariablen verwendet, und eine optimale Lösung der mindestens einen KPI innerhalb eines Wertebereichs der Uplink-Leistungsregelungsparameter als ein Optimierungsziel verwendet; und
Lösen des ersten Optimierungsmodells, um Uplink-Leistungsregelungsparameter der mehreren Zellen zu erlangen.

3. Uplink-Leistungsregelungsverfahren nach Anspruch 2, wobei es sich bei der mindestens einen KPI um mehrere KPIs handelt, und das Erstellen eines ersten Optimierungsmodells gemäß dem KPI-Model umfasst:

Bestimmen der Uplink-Leistungsregelungsparameter der mehreren Zellen als Optimierungsvariablen des ersten Optimierungsmodells; und
Bestimmen eines gewichteten Mindestwerts der mehreren KPIs als ein Optimierungsziel des ersten Optimierungsmodells.

4. Uplink-Leistungsregelungsverfahren nach Anspruch 2 oder 3, wobei das Lösen des ersten Optimierungsmodells umfasst:

Zuordnen der Optimierungsvariablen des ersten Optimierungsmodells aus einem diskreten Parameterraum zu einem kontinuierlichen Parameterraum, und Konvertieren einer Zielfunktion des ersten Optimierungsmodells in eine stetige und glatte Funktion, um nach der Konversion ein zweites Optimierungsmodell zu erlangen; Bestimmen einer Lösung der Optimierungsvariablen im kontinuierlichen Parameterraum gemäß dem zweiten Optimierungsmodell; und

Zuordnen der Lösung der Optimierungsvariablen im kontinuierlichen Parameterraum zurück zum diskreten Parameterraum, um eine Lösung der Optimierungsvariablen im diskreten Parameterraum zu bestimmen.

5. Uplink-Leistungsregelungsverfahren nach einem der Ansprüche 1 bis 4, wobei die Uplink-Leistungsregelungsparameter der mehreren Zellen einen Uplink-Leistungsregelungsreferenzwert jeder Zelle der mehreren Zellen und einen Uplink-Pfadverlustkompensationsfaktor jeder Zelle umfassen.

6. Uplink-Leistungsregelungsverfahren nach einem der Ansprüche 1 bis 5, wobei die mindestens eine KPI des Netzwerks mindesten eines umfasst von:

Uplink-Last, einem Verbindungsabbruch- und -blockierungsverhältnis, CDBR, und einem mittleren Uplink-Signal-zu-Interferenz-plus-Rausch-Verhältnis.

7. Uplink-Leistungsregelungsvorrichtung (200), umfassend:

eine Verarbeitungseinheit (210), die zum Optimieren von Uplink-Leistungsregelungsparametern mehrerer Zellen gemäß einem Performance-Kennzahlen, KPI,-Modell, konfiguriert ist, wobei das KPI-Modell verwendet wird, um eine Zuordnungsbeziehung zwischen den Uplink-Leistungsregelungsparametern der mehreren Zellen und mindestens einer KPI eines Netzwerks anzuzeigen, in welchem sich die mehreren Zellen befinden; und eine Steuereinheit (220), die zum Durchführen von Uplink-Leistungsregelung an Benutzereinrichtungen in den mehreren Zellen gemäß den Uplink-Leistungsregelungsparametern der mehreren Zellen, die durch die Verarbeitungseinheit (210) erlangt werden, konfiguriert ist.

8. Uplink-Leistungsregelungsvorrichtung (200) nach Anspruch 7, wobei die Verarbeitungseinheit (210) insbesondere zum Erstellen eines ersten Optimierungsmodells gemäß dem KPI-Modell, wobei das erste Optimierungsmodell die Uplink-Leistungsregelungsparameter der mehreren Zellen als Optimierungsvariablen verwendet, und eine optimale Lösung der mindestens einen KPI innerhalb eines Wertebereichs der Uplink-Leistungsregelungsparameter als ein Optimierungsziel verwendet; und Lösen des ersten Optimierungsmodells, um Uplink-Leistungsregelungsparameter der mehreren Zellen zu erlangen, konfiguriert ist.

9. Uplink-Leistungsregelungsvorrichtung (200) nach Anspruch 7 oder 8, wobei es sich bei der mindestens einen KPI um mehrere KPIs handelt, und die Verarbeitungseinheit (210) insbesondere zum Bestimmen der Uplink-Leistungsregelungsparameter der mehreren Zellen als Optimierungsvariablen des ersten Optimierungsmodells und Bestimmen eines gewichteten Mindestwerts der mehreren KPIs als ein Optimierungsziel des ersten Optimierungsmodells konfiguriert ist.

10. Uplink-Leistungsregelungsvorrichtung (200) nach Anspruch 8 oder 9, wobei die Verarbeitungseinheit (210) insbesondere so konfiguriert ist, dass sie die Optimierungsvariablen des ersten Optimierungsmodells aus einem diskreten Parameterraum zu einem kontinuierlichen Parameterraum zuordnet, und eine Zielfunktion des ersten Optimierungsmodells in eine stetige und glatte Funktion konvertiert, um nach der Konversion ein zweites Optimierungsmodell zu erlangen; eine Lösung der Optimierungsvariablen im kontinuierlichen Parameterraum gemäß dem zweiten Optimierungsmodell bestimmt; und die Lösung der Optimierungsvariablen im kontinuierlichen Parameterraum zurück zum diskreten Parameterraum zuordnet, um eine Lösung der Optimierungsvariablen im diskreten Parameterraum zu bestimmen.

11. Uplink-Leistungsregelungsvorrichtung (200) nach einem der Ansprüche 7 bis 10, wobei die Uplink-Leistungsregelungsparameter der mehreren Zellen einen Uplink-Leistungsregelungsreferenzwert jeder Zelle der mehreren Zellen und einen Uplink-Pfadverlustkompensationsfaktor jeder Zelle umfassen.

12. Uplink-Leistungsregelungsvorrichtung (200) nach einem der Ansprüche 7 bis 11, wobei die mindestens eine KPI des Netzwerks mindesten eines umfasst von:

Uplink-Last, einem Verbindungsabbruch- und -blockierungsverhältnis, CDBR, und einem mittleren Uplink-Signal-zu-Interferenz-plus-Rausch-Verhältnis.

**Revendications**

1. Procédé de commande de puissance de liaison montante, comprenant :

   l'optimisation (110) de paramètres de commande de puissance de liaison montante de multiples cellules conformément à un modèle d'indicateur de performance clé, KPI, dans lequel le modèle KPI est utilisé pour indiquer une relation de correspondance entre les paramètres de commande de puissance de liaison montante des multiples cellules et au moins un KPI d'un réseau sur lequel se trouvent les multiples cellules ; et
   l'exécution (120) d'une commande de puissance de liaison montante sur un équipement utilisateur dans les multiples cellules conformément aux paramètres de commande de puissance de liaison montante des multiples cellules.

2. Procédé de commande de puissance de liaison montante selon la revendication 1, dans lequel l'optimisation de paramètres de commande de puissance de liaison montante des multiples cellules conformément à un modèle KPI comprend :

   la création d'un premier modèle d'optimisation conformément au modèle KPI, dans lequel le premier modèle d'optimisation utilise les paramètres de commande de puissance de liaison montante des multiples cellules comme variables d'optimisation, et utilise une solution optimale de l'au moins un KPI dans une plage de valeurs des paramètres de commande de puissance de liaison montante comme cible d'optimisation ; et
   la résolution du premier modèle d'optimisation, pour acquérir des paramètres de commande de puissance de liaison montante des multiples cellules.

3. Procédé de commande de puissance de liaison montante selon la revendication 2, dans lequel l'au moins un KPI consiste en de multiples KPI, et la création d'un premier modèle d'optimisation conformément au modèle KPI comprend :

   la détermination des paramètres de commande de puissance de liaison montante des multiples cellules comme variables d'optimisation du premier modèle d'optimisation ; et
   la détermination d'une valeur pondérée minimum des multiples KPI comme cible d'optimisation du premier modèle d'optimisation.

4. Procédé de commande de puissance de liaison montante selon la revendication 2 ou 3, dans lequel la résolution du premier modèle d'optimisation comprend :

   la mise en correspondance des variables d'optimisation du premier modèle d'optimisation d'un espace paramétrique discret vers un espace paramétrique continu, et la conversion d'une fonction cible du premier modèle d'optimisation en une fonction continue et lisse, pour acquérir un second modèle d'optimisation après conversion ;
   la détermination d'une solution des variables d'optimisation dans l'espace paramétrique continu conformément au second modèle d'optimisation ; et
   la mise en correspondance de la solution des variables d'optimisation dans l'espace paramétrique continu de retour vers l'espace paramétrique discret, pour déterminer une solution des variables d'optimisation dans l'espace paramétrique discret.

5. Procédé de commande de puissance de liaison montante selon l'une quelconque des revendications 1 à 4, dans lequel les paramètres de commande de puissance de liaison montante des multiples cellules comprennent une valeur de référence de commande de puissance de liaison montante de chaque cellule des multiples cellules, et un facteur de compensation de pertes de chemin de liaison montante de chaque cellule.

6. Procédé de commande de puissance de liaison montante selon l'une quelconque des revendications 1 à 5, dans lequel l'au moins un KPI du réseau comprend au moins l'un des éléments suivants :

   charge de liaison montante, rapport de rejets et de blocages d'appels, CDBR, et
   rapport moyen du signal utile sur brouillage plus bruit de liaison montante.

7. Appareil de commande de puissance de liaison montante (200), comprenant :

13

une unité de traitement (210), configurée pour optimiser des paramètres de commande de puissance de liaison montante de multiples cellules conformément à un modèle d'indicateur de performance clé, KPI, dans lequel le modèle KPI est utilisé pour indiquer une relation de correspondance entre les paramètres de commande de puissance de liaison montante des multiples cellules et au moins un KPI d'un réseau sur lequel se trouvent les multiples cellules ; et

une unité de commande (220), configurée pour exécuter une commande de puissance de liaison montante sur un équipement utilisateur dans les multiples cellules conformément aux paramètres de commande de puissance de liaison montante des multiples cellules qui sont acquis par l'unité de traitement (210).

8. Appareil de commande de puissance de liaison montante (200) selon la revendication 7, dans lequel l'unité de traitement (210) est configurée spécifiquement pour créer un premier modèle d'optimisation conformément au modèle KPI, dans lequel le premier modèle d'optimisation utilise les paramètres de commande de puissance de liaison montante des multiples cellules comme variables d'optimisation, et utilise une solution optimale de l'au moins un KPI dans une plage de valeurs des paramètres de commande de puissance de liaison montante comme cible d'optimisation ; et résoudre le premier modèle d'optimisation, pour acquérir des paramètres de commande de puissance de liaison montante des multiples cellules.

9. Appareil de commande de puissance de liaison montante (200) selon la revendication 7 ou 8, dans lequel l'au moins un KPI consiste en de multiples KPI, et l'unité de traitement (210) est configurée spécifiquement pour déterminer les paramètres de commande de puissance de liaison montante des multiples cellules comme variables d'optimisation du premier modèle d'optimisation, et déterminer une valeur pondérée minimum des multiples KPI comme cible d'optimisation du premier modèle d'optimisation.

10. Appareil de commande de puissance de liaison montante (200) selon la revendication 8 ou 9, dans lequel l'unité de traitement (210) est configurée spécifiquement pour mettre en correspondance les variables d'optimisation du premier modèle d'optimisation d'un espace paramétrique discret vers un espace paramétrique continu, et convertir une fonction cible du premier modèle d'optimisation en une fonction continue et lisse, pour acquérir un second modèle d'optimisation après conversion ; déterminer une solution des variables d'optimisation dans l'espace paramétrique continu conformément au second modèle d'optimisation ; et mettre en correspondance la solution des variables d'optimisation dans l'espace paramétrique continu de retour vers l'espace paramétrique discret, pour déterminer une solution des variables d'optimisation dans l'espace paramétrique discret.

11. Appareil de commande de puissance de liaison montante (200) selon l'une quelconque des revendications 7 à 10, dans lequel les paramètres de commande de puissance de liaison montante des multiples cellules comprennent une valeur de référence de commande de puissance de liaison montante de chaque cellule des multiples cellules, et un facteur de compensation de pertes de chemin de liaison montante de chaque cellule.

12. Appareil de commande de puissance de liaison montante (200) selon l'une quelconque des revendications 7 à 11, dans lequel l'au moins un KPI du réseau comprend au moins l'un des éléments suivants :

charge de liaison montante, rapport de rejets et de blocages d'appels, CDBR, et
rapport moyen du signal utile sur brouillage plus bruit de liaison montante.

110

Optimize uplink power control parameters of multiple cells according to a KPI model, where the KPI model is used to indicate a mapping relationship between the uplink power control parameters of the multiple cells and at least one KPI of a network on which the multiple cells are located

120

Perform uplink power control on user equipment in the multiple cells according to the uplink power control parameters of the multiple cells

FIG. 1

Uplink power control apparatus 200

Processing unit 210

Control unit 220

FIG. 2

Uplink power control apparatus 300

Memory 310

Processor 320

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20100086770 A
- CN 103037380 A